# EUROPÄISCHE PATENTSCHRIFT

(11) **EP 2 376 375 B1**
(45) Veröffentlichungstag und Bekanntmachung des Hinweises auf die Patenterteilung: **27.11.2013**
(21) Anmeldenummer: 09768071.4
(22) Anmeldetag: 10.12.2009
(51) Int. Cl.: C01B 21/068

(54) **VERFAHREN ZUR HERSTELLUNG VON HOCHREINEM SILICIUMNITRID**
METHOD FOR PRODUCING HIGH-PURITY SILICON NITRIDE
PROCÉDÉ DE FABRICATION DE NITRURE DE SILICIUM HAUTEMENT PUR

(30) Priorität: 13.12.2008 DE 102008062177
(43) Veröffentlichungstag der Anmeldung: 19.10.2011
(73) Patentinhaber: AlzChem AG, 83308 Trostberg (DE)
(72) Erfinder: SCHROLL, Georg, 83365 Nußdorf (DE)
(74) Vertreter: Dey, Michael
(86) Internationale Anmeldenummer: PCT/EP2009/066828
(87) Internationale Veröffentlichungsnummer: WO 2010/066839

(56) Entgegenhaltungen:
- EP-A1- 0 377 132
- EP-A2- 0 440 235

## Beschreibung

Gegenstand der vorliegenden Erfindung ist ein zweistufiges Verfahren zur Herstellung von hochreinem Siliciumnitrid durch Azotierung von metallischem Siliciumpulver.

Siliciumnitrid-Pulver stellt ein technisch wichtiges Ausgangsmaterial zur Herstellung von keramischen Werkstoffen mit hoher Temperatur- und Korrosionsbeständigkeit sowie Festigkeit dar. Dieser Werkstoff findet insbesondere Anwendung zur Herstellung von Teilen, die starken Temperaturbelastungen ausgesetzt sind. So wird Siliciumnitrid insbesondere im Motoren- und Turbinenbau oder zur Herstellung von chemischen Apparaturen eingesetzt. In der metallurgischen Industrie ist Siliciumnitrid ein wichtiger Bestandteil von Gießrinnen, Pfannen, Abstichschnauzen sowie Schmelztiegeln etc.

Die Eigenschaften der aus Siliciumnitrid geformten Gegenstände werden weitgehend von dessen Reinheit bestimmt.

Entsprechend dem Stand der Technik sind bereits eine Vielzahl an Verfahren zur Herstellung von hochreinem Siliciumnitrid entwickelt worden, die sich in vier Verfahrensvarianten einteilen lassen.

Besonders viele Verfahren beschäftigen sich mit der thermischen Zersetzung von Siliciumtetrachlorid oder Chlorsilanen in Gegenwart von Ammoniak oder Wasserstoff/Stickstoff-Gemischen.

So wird bspw. gemäß der EP 365 295 A1 kristallines Siliciumnitrid-Pulver durch eine Gasphasenreaktion von Ammoniak mit einem Silan bei Temperaturen von 900 bis 1.450 °C hergestellt.

Aus der US-Patentschrift 4,122,155 ist ein Verfahren zur Herstellung von amorphem Siliciumnitrid-Pulver bekannt, wobei man Silane und Ammoniak im Temperaturbereich von 600 bis 1.000 °C umsetzt und anschließend das amorphe Reaktionsprodukt bei mindestens 1.100°C calciniert, um auf diese Weise ultrafeines Siliciumnitrid-Pulver mit hoher Reinheit herzustellen.

Gemäß der japanischen Offenlegungsschrift JP 06-345412 wird ein hoch reiner Siliciumnitrid-/Siliciumcarbid-Komplex dadurch hergestellt, dass man Organosilicium-Verbindungen, wie z. B. Hexamethyldisilazan thermisch zersetzt. Das entsprechende Reaktionsprodukt wird zur Herstellung von Supraleitern verwendet.

Die US-Patente 4,952,715 sowie 5,008,422 beschreiben die thermische Zersetzung von Polysilazanen, wobei Gemische aus Siliciumnitrid, Siliciumcarbid und ggf. Siliciumoxinitrid entstehen.

Nachteilig bei all diesen Verfahrensvarianten ist die Tatsache, dass man mit Ammoniak arbeiten muss, was technisch äußerst schwierig und mit besonderen Sicherheitsmaßnahmen verbunden ist. Die andere Alternative, nämlich die Herstellung von Siliciumnitrid ausgehend von Organosilicium-Verbindungen, wie z. B. Silazanen, muss als technisch sehr aufwendig und für die großtechnische Herstellung von Siliciumnitrid als weitgehend unwirtschaftlich angesehen werden.

Ähnlich verhält es sich mit der zweiten Verfahrensvariante, nämlich der Fällung und thermischen Zersetzung von Siliciumdiimid.

So wird bspw. in der europäischen Patentschrift 479 050 ein Siliciumdiimid mit einem Kohlenstoffgehalt von max. 0,5 Gew.-% und einem Chlorgehalt von max. 20 ppm beschrieben, welches in Stickstoff-haltiger Atmosphäre zu Siliciumnitrid umgesetzt wird.

Als besonders nachteilig muss hierbei die Tatsache angesehen werden, dass das Siliciumdiimid durch Reaktion von Siliciumtetrachlorid oder Siliciumsulfid mit flüssigem oder gasförmigem Ammoniak hergestellt werden muss, was im technischen Maßstab nur mit großem apparativem Aufwand zu bewerkstelligen ist.

Dieselben Nachteile weist das Verfahren gemäß dem US-Patent 4,405,589 auf, welches ein Verfahren zur Herstellung von Siliciumnitrid-Pulver offenbart, wobei man zunächst ein Chloralkylsilan mit Ammoniak in der Flüssig- oder Gasphase umsetzt und anschließend das entstehende Siliciumdiimid im Temperaturbereich von 1.200 bis 1.700 °C in einer Inertgasatmosphäre calciniert.

Bei der dritten Verfahrensvariante handelt es sich um die carbothermische Reduktion von Siliciumdioxid-haltigen Materialien in Gegenwart von Stickstoff.

So wird bspw. in der japanischen Offenlegungsschrift JP 60-122706 die Herstellung von Siliciumnitrid-Pulver offenbart, wobei man eine Mischung aus Siliciumdioxid mit Kohlenstoff und Siliciumnitrid in einer Inertgasatmosphäre, bestehend aus Stickstoff, calciniert.

Aus dem US-Patent 5,378,666 ist die Herstellung von Whisker-freien Siliciumnitrid-Partikeln bekannt, welche durch Reaktion von SiO₂ und Kohlenstoff in einer porösen Kohlenstoff-haltigen Matrix erhalten werden.

Des Weiteren wird in der US-Patentschrift 5,662,875 ein kontinuierliches Verfahren zur Herstellung von feinteiligem Siliciumnitrid beschrieben, wobei man Siliciumdioxid und Kohlenstoff in einer Stickstoff-haltigen Atmosphäre in Gegenwart von Impfkristallen reagieren lässt.

Die Nachteile dieser Verfahrensvariante bestehen im Wesentlichen darin, dass von relativ reinen Ausgangsmaterialien ausgegangen werden muss und dass die Reaktionsbedingungen genau kontrolliert werden müssen, um die Bildung des unerwünschten Nebenprodukts Siliciumcarbid zu vermeiden. Außerdem enthalten die entsprechenden Endprodukte merkliche Mengen an Kohlenstoff und Sauerstoff.

Die vierte Verfahrensvariante zur Herstellung von Siliciumnitrid stellt die Azotierung von Siliciumpulver dar, welches vor allem für die großtechnische Herstellung von Siliciumnitrid-Pulver geeignet ist.

Entsprechend der japanischen Patentanmeldung JP 06-219715 wird die Herstellung von hochreinem Siliciumnitrid-Pulver mit einem hohen α-Phasengehalt beschrieben, wobei metallisches Siliciumpulver mit Stickstoff in Gegenwart von Calciumoxid zur Umsetzung gebracht wird. Nachteilig bei dieser Verfahrensvariante ist die Tatsache, dass das entsprechende Siliciumnitrid-Pulver einen relativ hohen Calciumgehalt aufweist und die Entfernung des Calciums einen zusätzlichen technischen Aufwand bedeutet.

Die direkte Herstellung von Siliciumnitrid durch Reaktion von Silicium und Stickstoff ohne weitere Zusätze ist bspw. aus der EP 377 132 B1 bekannt. Hierbei wird in der ersten Reaktionsstufe Siliciumpulver mit Stickstoff bei 1.000 bis 1.800 °C bis zu einem Stickstoffgehalt von 5 bis 25 Gew.-% umgesetzt und das teilazotierte Produkt in einer zweiten Reaktionsstufe bei 1.100 bis 1.600 °C in einem Gemisch aus Stickstoff und Inertgas fertig azotiert. Mit Hilfe dieses Verfahrens lassen sich lediglich Reinheitsgrade von max. 99,8 % erzielen.

Der vorliegenden Erfindung lag daher die Aufgabe zugrunde, ein Verfahren zur Herstellung von hochreinem Siliciumnitrid zu entwickeln, welches die genannten Nachteile entsprechend dem Stand der Technik nicht aufweist, sondern in technisch einfacher und kostengünstiger Weise die Herstellung von hochreinem Siliciumnitrid ermöglicht.

Diese Aufgabe wurde erfindungsgemäß dadurch gelöst, dass man
a) hochreines Silicium mit Stickstoff in einem Drehrohrofen mit einer ersten Temperaturzone von 1.150 bis 1.250 °C und mindestens einer weiteren Temperaturzone von 1.250 bis 1.350 °C in Gegenwart eines Gasgemisches, bestehend aus Argon und Wasserstoff, bis zu einem Stickstoffgehalt von 10 bis 30 Gew.-% umsetzt und
b) das teilazotierte Produkt aus Stufe a) in einem Kammer- oder Setzofen im Ruhebett bei 1.100 bis 1.450 °C mit einem Gemisch aus Stickstoff und ggf. Argon und/oder ggf. Wasserstoff, vorzugsweise mit einem Gemisch aus Stickstoff und Argon und ggf. Wasserstoff, bis zur Beendigung der Stickstoff-Aufnahme reagieren lässt.

Es hat sich überraschenderweise gezeigt, dass man mit Hilfe des erfindungsgemäßen Verfahrens in technisch einfacher Weise hochreines Siliciumnitrid mit einer Reinheit von > 99,9 % herstellen kann.

Beim Verfahren entsprechend der vorliegenden Erfindung wird Silicium in zwei Stufen azotiert. In der ersten Reaktionsstufe a) wird hochreines Silicium mit Stickstoff in einem Drehrohrofen bis zu einem Stickstoffgehalt von 10 bis 30 Gew.-%, vorzugsweise 15 bis 20 Gew.-%, umgesetzt.

Das hochreine Silicium sollte hierbei eine Reinheit von vorzugsweise > 99,9 %, insbesondere > 99,99 %, aufweisen. Die metallischen Verunreinigungen im Silicium sollten hierbei insbesondere < 100 ppm und vorzugsweise < 50 ppm betragen.

Die Teilchengröße es eingesetzten Siliciumpulvers kann in weiten Grenzen variiert werden, doch hat es sich als besonders vorteilhaft erwiesen, Siliciumpulver mit einer Korngröße < 100 µm, bevorzugt 1 µm bis 50 µm und insbesondere < 20 µm, einzusetzen.

Es ist als erfindungswesentlich anzusehen, dass die Teilazotierung in Stufe a) in einem Drehrohrofen durchgeführt wird, der eine erste Temperaturzone von 1.150 bis 1.250 °C und mindestens eine weitere Temperaturzone von 1.250 bis 1.350 °C aufweist, wobei vorzugsweise die weiteren Temperaturzonen jeweils höhere Temperaturen besitzen als die vorhergehende Temperaturzone. Bevorzugt weist jede nachfolgende weitere Temperaturzone eine um mindestens 5 °C höhere, insbesondere eine um mindestens 10 °C höhere Temperatur auf als die jeweils vorhergehende Temperaturzone. Gemäß einer bevorzugten Ausführungsform besitzt der Drehrohrofen eine erste Temperaturzone von 1.150 bis 1.250 °C und zwei weitere Temperaturzonen von 1.250 bis 1.350 °C.

Mit Hilfe dieser Verfahrensvariante wird gewährleistet, dass die Reaktionswärme infolge der exothermen Reaktion sofort an das Drehrohr abgegeben und somit eine Überhitzung des Reaktionsgutes weitgehend vermieden wird.

Die Teilazotierung in Stufe a) wird in Gegenwart eines Gasgemisches, bestehend aus Argon und Wasserstoff durchgeführt, wobei der Argongehalt, insbesondere 5 bis 30 Vol.-% und besonders bevorzugt 10 bis 20 Vol.-%, bezogen auf den Stickstoffgehalt beträgt.

Der Anteil an Wasserstoff wird in Stufe a) vorzugsweise auf 1 bis 10 Vol.-% und besonders bevorzugt auf 3 bis 7 Vol.-%, bezogen auf die Summe von Stickstoff und Argon, eingestellt.

In einer bevorzugten Ausführungsform sind neben den Ausgangsstoffen Silicium und Stickstoff und dem Gasgemisch bestehend aus Argon und Wasserstoff keine weiteren Stoffe in der Umsetzung in Schritt a) gegenwärtig. In einer weiteren bevorzugten Ausführungsform erfolgt die Umsetzung gemäß Schritt a) jedenfalls in Abwesenheit von Calciumoxid.

Die Reaktionsbedingungen im Hinblick auf den Druck in der Reaktionsstufe a) sind relativ unkritisch, doch hat es sich als besonders vorteilhaft erwiesen, die Teilazotierung im Drehrohrofen im Druckbereich von 1,01 bis 1,8 bar, insbesondere 1,1 bis 1,7 bar, durchzuführen. Durch diese Anwendung eines leichten Überdrucks werden insbesondere Dichtungsprobleme im Drehrohrofen vermieden.

Die Verweilzeit des Siliciumpulvers in der Reaktionsstufe a) kann in Abhängigkeit von der Größe des Drehrohrofens und der Durchlaufgeschwindigkeit des Siliciums sehr stark variieren. In der Regel liegt die Verweilzeit des Siliciumpulvers in der Reaktionsstufe a) bei 60 bis 180 Minuten, bevorzugt bei 90 bis 180 Minuten. Vorzugsweise beträgt dabei die Verweilzeit in jeder der ersten und weiteren Temperaturzonen mindestens 5 Minuten und insbesondere mindestens 10 Minuten und am meisten bevorzugt mindestens 20 Minuten.

In der zweiten Reaktionsstufe b) wird das teilazotierte Produkt aus Stufe a) in einem Kammer- oder Setzofen im Ruhebett bei 1.100 bis 1.450 °C in Gegenwart eines Gasgemisches, bestehend aus Stickstoff, Argon und ggf. Wasserstoff, umgesetzt.

In einer bevorzugten Ausführungsform sind neben den Ausgangsstoffen teilazotiertes Produkt aus Stufe a) und Stickstoff sowie dem Gasgemisch bestehend aus Stickstoff, ggf. Argon und/oder ggf. Wasserstoff in Schritt b) keine weiteren Stoffe gegenwärtig.

Hierbei wird die Azotierung so lange fortgesetzt, bis der Stickstoff-Verbrauch pro Zeiteinheit praktisch auf Null abgesunken ist, so dass das Produkt voll durchreagiert ist und einen Stickstoffgehalt von bis zu 39,5 % erreicht hat. Gemäß einer bevorzugten Ausführungsform wird der Stickstoffanteil in Stufe b) im Reaktionsgas zunächst auf 20 bis 80 Vol.-% eingestellt und entsprechend dem Reaktionsvorschritt auf bis zu 100 Vol.-% Stickstoff erhöht.

Bevorzugt wird somit zunächst ein Gemisch bestehend aus Stickstoff, Argon und ggf. Wasserstoff eingesetzt und im Laufe der Reaktion dann durch bis zu 100 Vol.-% Stickstoff ersetzt.

Der Wasserstoffanteil in Stufe b) kann vorzugsweise bis zu 10 Vol.-%, insbesondere 1 Vol.-% bis 8 Vol.-%, bezogen auf die Summe von Stickstoff und Argon, betragen.

Die Verweilzeit des teilazotierten Siliciumnitrids im Kammer- oder Setzofen ist wiederum im Wesentlichen von der Dimensionierung des Ofens und der Durchlaufgeschwindigkeit des Siliciumnitrids abhängig und beträgt durchschnittlich 1 bis 14 Tage.

Die Verfahrensführung ist dabei vorzugsweise so, dass die Umsetzung in Stufe b) bei einer Temperatur im Bereich von 1.100 °C bis 1.250 °C begonnen wird. Die Temperatur wird dann vorzugsweise während der Umsetzung in Stufe b) erhöht, insbesondere auf 1.300 °C bis 1.450 °C. Die Erhöhung der Temperatur erfolgt bevorzugt schrittweise.

Das in Stufe b) erhaltene Siliciumnitrid fällt in der Regel als poröses, im Wesentlichen kugelförmiges Granulat mit einer Teilchengröße von 0,1 bis 30 mm, vorzugsweise 0,5 bis 25 mm, an. Falls gewünscht, kann das kugelförmige Granulat in Abhängigkeit von der Weiterverarbeitung zu feinteiligen Siliciumnitrid-Pulver vermahlen werden.

Das nach dem erfindungsgemäßen Verfahren hergestellte Siliciumnitrid weist hierbei vorzugsweise eine α-Phase von > 60 Gew.-% auf.

Mit Hilfe des erfindungsgemäßen Verfahrens ist es somit möglich, hochreines Siliciumnitrid mit einer Reinheit von > 99,9 %, insbesondere > 99,99 %, in technisch einfacher Weise herzustellen, wobei keinerlei weitere Reinigungsschritte, wie z. B. das Auslaugen mit anorganischen Säuren, erforderlich ist.

Die nachfolgenden Beispiele sollen die Erfindung näher erläutern.

### Beispiele

### Beispiel 1

Siliciumpulver einer Korngröße < 20 µm und einer Reinheit von > 99,99 % Si, wobei die Summe der darin enthaltenen metallischen Verunreinigungen < 40 ppm betrug, wurde kontinuierlich einem von Stickstoff (99,99 %), Argon (> 99,99 %), und Wasserstoff (> 99,99 %), durchströmten Drehrohr aufgegeben. Dabei wurde ein Wasserstoffgehalt von 3,5 Vol.-% im Gasgemisch bezogen auf die Summe von Stickstoff und Argon eingestellt. Der Argonanteil bezogen auf Stickstoff lag bei 12 Vol.-%. Die Heizzonen des Drehofen wurden auf 1.250, 1.330 und 1.350 °C aufgeheizt. Die Umdrehungsgeschwindigkeit des Rohres betrug 1,2 Upm, die exotherme Reaktion führte bei einem Gasgemischpartialdruck von 1,01 x 10⁵ (1,01 bar) und einer Verweilzeit in den Reaktionszonen von 120 Min. zu einem teilazotierten Produkt. Das poröse, im Wesentlichen kugelförmige Granulat, welches im Korngrößenbereich von 1 bis 25 mm anfiel, hatte einen Stickstoffgehalt von durchschnittlich 19,4 Gew.-%. Nach dem Überführen dieses Granulates in einen gasdichten Kammerofen mit Stickstoff/Argon/Wasserstoff-Atmosphäre im Verhältnis 34 : 60 : 6 Vol.-%, wobei das Stickstoff/Argon/Wasserstoff-Verhältnis entsprechend dem fortschreitenden Reaktionsverlauf gesteuert wird (bei schnellem Reaktionsverlauf erhöhter Argonanteil im Gasgemisch als bei langsamem Reaktionsverlauf), wurde das Produkt bei einer Temperatur beginnend bei 1.150 °C durch schrittweise Erhöhung der Ofentemperatur bis 1.410 °C vollständig in 10 Tagen umgesetzt. Der Stickstoffanteil im Reaktionsgas wurde entsprechend dem Reaktionsfortschritt bis auf 100 % Stickstoff erhöht. Der Stickstoffanteil des erhaltenen Siliciumnitrids betrug 39,2 %, wobei das Produkt als lockeres poröses Granulat entsprechend dem unveränderten Korngrößenbereich des eingesetzten teilazotierten Granulats entnommen werden konnte. Das erhaltene Siliciumnitrid wurde auf einer entsprechend zugestellten Strahlmühle auf eine Korngröße < 10 µm gemahlen.
Die Phasenanalyse des erhaltenen Produktes zeigte einen α-Anteil von 85 % im Siliciumnitrid, der restliche Anteil lag in der β-Modifikation vor.

### Beispiel 2

Siliciumpulver einer Korngröße < 20 µm und einer Reinheit von > 99,99 % Si, wobei die Summe der darin enthaltenen metallischen Verunreinigungen < 40 ppm betrug, wurde kontinuierlich einem von Stickstoff (99,99 %), Argon (> 99,99 %), und Wasserstoff (> 99,99 %), durchströmten Drehrohr zugegeben. Dabei wurde ein Wasserstoffgehalt von 3,5 Vol.-% im Gasgemisch bezogen auf die Summe von Stickstoff und Argon eingestellt. Der Argonanteil bezogen auf Stickstoff lag bei 19 Vol.-%. Die Heizzonen waren auf 1.150, 1.250 und 1.260 °C aufgeheizt. Die Umdrehungsgeschwindigkeit des Rohres betrug 1,1 Upm, der Gasgemischpartialdruck 1,01 x 10⁵ (1,01 bar).Die Verweilzeit des Pulvers im Drehrohr betrug 180 Minuten. Es entstand ein poröses kugelförmiges Granulat mit einem Durchmesserbereich von 0,5 bis 15 mm und einem durchschnittlichen Stickstoffgehalt von 17,8 Gew.-%.
Das so erhaltene teilazotierte Granulat wurde in lockerer Schüttung in einem auf 1.200 °C aufgeheizten gasdichten Kammerofen mit Stickstoff/Argon/Wasserstoff-Atmosphäre weiter azotiert, wobei die Stickstoff/Argon/Wasserstoff-Atmosphäre im Verhältnis 54:40:6 Vol.-% eingestellt wurde. Die Temperatur des Ofens wurde bis zur vollständigen Beendigung der Stickstoff-Aufnahme in 7 Tagen schrittweise auf 1.405 °C erhöht. Das Verhältnis von Stickstoff zu Argon wurde entsprechen dem Reaktionsfortschritt bis auf 100 % Stickstoff erhöht. Dem Ofen wurde ein Siliciumnitrid mit durchschnittlich 38,8 % N als lockeres poröses Granulat entsprechend dem unveränderten Korngrößenbereich des eingesetzten teilazotierten Granulats entnommen. Anschließend wurde das Siliciumnitrid-Granulat auf einer Strahlmühle < 10 µm gemahlen. Die Phasenanalyse zeigte einen α-Gehalt von 65 %.

Die Durchschnitts-Analyse der gemahlenen Produkte zeigte nachfolgende Verunreinigungen.

| Element | Konzentration |
|---|---|
| | ppm |
| Al | 2 |
| B | <2 |
| Ca | 2 |
| Co | <1 |
| Cr | <2 |
| Cu | <1 |
| Fe | 6 |
| K | <1 |
| Li | <1 |
| Mg | <1 |
| Mn | <2 |
| Mo | <1 |
| Na | <2 |
| Ni | <2 |
| Ti | <3 |
| V | <1 |
| W | <1 |

## Patentansprüche

1. Verfahren zur Herstellung von hochreinem Siliciumnitrid in zwei Stufen, **dadurch gekennzeichnet, dass** man
a) hochreines Silicium mit Stickstoff in einem Drehrohrofen mit einer ersten Temperaturzone von 1.150 bis 1.250 °C und mindestens einer weiteren Temperaturzone von 1.250 bis 1.350 °C in Gegenwart eines Gasgemisches, bestehend aus Argon und Wasserstoff, bis zu einem Stickstoffgehalt von 10 bis 30 Gew.-% umsetzt und
b) das teilazotierte Produkt aus Stufe a) in einem Kammer- oder Setzofen im Ruhebett bei 1.100 bis 1.450 °C mit einem Gemisch aus Stickstoff und ggf. Argon und/oder ggf. Wasserstoff bis zur Beendigung der Stickstoff-Aufnahme reagieren lässt.

2. Verfahren nach Anspruch 1, **dadurch gekennzeichnet, dass** das hochreine Siliciumpulver eine Korngröße < 100 µm, insbesondere eine Korngröße < 20 µm, besitzt.

3. Verfahren nach Anspruch 1 oder 2, **dadurch gekennzeichnet, dass** das hochreine Silicium eine Reinheit von > 99,9%, insbesondere > 99,99 %, aufweist.

4. Verfahren nach einem der Ansprüche 1 bis 3, **dadurch gekennzeichnet, dass** die metallischen Verunreinigungen im Silicium < 100 ppm, vorzugsweise < 50 ppm, betragen.

5. Verfahren nach einem der Ansprüche 1 bis 4, **dadurch gekennzeichnet, dass** der Drehrohrofen eine erste Temperaturzone von 1.150 bis 1.250 °C und zwei weitere Temperaturzonen von 1.250 bis 1.350 °C besitzt.

6. Verfahren nach einem der Ansprüche 1 bis 5, **dadurch gekennzeichnet, dass** der Argongehalt in Stufe a) 5 bis 30 Vol.-%, vorzugsweise 10 bis 20 Vol.-%, bezogen auf den Stickstoffgehalt, beträgt.

7. Verfahren nach einem der Ansprüche 1 bis 6, **dadurch gekennzeichnet, dass** man Wasserstoff in Stufe a) in einer Menge von 1 bis 10 Vol.-%, vorzugsweise 3 bis 7 Vol.-%, bezogen auf die Summe von Stickstoff und Argon, einsetzt.

8. Verfahren nach einem der Ansprüche 1 bis 7, **dadurch gekennzeichnet, dass** die Reaktionsstufe a) im Drehrohrofen im Druckbereich von 1,01 bis 1,8 bar durchgeführt wird.

9. Verfahren nach einem der Ansprüche 1 bis 8, **dadurch gekennzeichnet, dass** die Verweilzeit des Siliciumpulvers in der Reaktionsstufe a) 60 bis 180 Minuten beträgt.

10. Verfahren nach einem der Ansprüche 1 bis 9, **dadurch gekennzeichnet, dass** man die Teilazotierung gemäß Stufe a) bis zu einem Stickstoffgehalt von 15 bis 20 Gew.-% durchführt.

11. Verfahren nach einem der Ansprüche 1 bis 10, **dadurch gekennzeichnet, dass** man in Stufe b) den Stickstoffanteil im Reaktionsgas auf 20 bis 80 Vol.-% einstellt und entsprechend dem Reaktionsvorschritt auf bis 100 Vol.-% Stickstoff erhöht.

12. Verfahren nach einem der Ansprüche 1 bis 11, **dadurch gekennzeichnet, dass** der Wasserstoffanteil in Stufe b) 0 bis 10 Vol.-%, bezogen auf die Summe von Stickstoff und Argon, beträgt.

13. Verfahren nach einem der Ansprüche 1 bis 12, **dadurch gekennzeichnet, dass** die Verweilzeit des teilazotierten Siliciumnitrids in Stufe b) 1 bis 14 Tage beträgt.

14. Verfahren nach einem der Ansprüche 1 bis 13, **dadurch gekennzeichnet, dass** das in Stufe b) hergestellte Siliciumnitrid eine α-Phase von > 60 Gew.-% aufweist.

15. Verfahren nach einem der Ansprüche 1 bis 14, **dadurch gekennzeichnet, dass** das in Stufe b) hergestellte Siliciumnitrid-Granulat eine Teilchengröße von 0,1 bis 30 mm, vorzugsweise 0,5 bis 25 mm, besitzt.

## Claims

1. Method for producing high purity silicon nitride in two steps, **characterised in that**:
a) high purity silicon is reacted with nitrogen in a rotary kiln having a first temperature zone of from 1150 to 1250 °C and at least one further temperature zone of 1250 to 1350 °C in the presence of a gas mixture consisting of argon and hydrogen, up to a nitrogen content of 10 to 30 wt. %; and,
b) the partially azotised product from step a) is reacted in a chamber or batch kiln in a stationary bed at 1100 to 1450 °C with a mixture of nitrogen and optionally argon and/or optionally hydrogen until nitrogen absorption ceases.

2. Method according to claim 1, **characterised in that** the high purity silicon powder has a grain size of < 100 µm, more particularly a grain size of < 20 µm.

3. Method according to either claim 1 or claim 2, **characterised in that** the high purity silicon has a purity of > 99.9 %, more particularly > 99.99%.

4. Method according to any of claims 1 to 3, **characterised in that** the metallic impurities in the silicon amount to < 100 ppm, preferably < 50 ppm.

5. Method according to any of claims 1 to 4, **characterised in that** the rotary kiln has a first temperature zone of from 1150 to 1250 °C and two additional temperature zones of from 1250 to 1350 °C.

6. Method according to any of claims 1 to 5, **characterised in that** the argon content in step a) is 5 to 30 vol. %, preferably 10 to 20 vol. %, relative to the nitrogen content.

7. Method according to any of claims 1 to 6, **characterised in that** hydrogen is used in step a) in a quantity of from 1 to 10 vol. %, preferably 3 to 7 vol. %, relative to the sum of nitrogen and argon.

8. Method according to any of claims 1 to 7, **characterised in that** the reaction step a) is carried out in the rotary kiln in the pressure range of from 1.01 to 1.8 bar.

9. Method according to any of claims 1 to 8, **characterised in that** the retention time of the silicon powder in reaction step a) is 60 to 180 minutes.

10. Method according to any of claims 1 to 9, **characterised in that** the partial azotisation according to step a) is carried out up to a nitrogen content of 15 to 20 wt. %.

11. Method according to any of claims 1 to 10, **characterised in that** in step b), the proportion of nitrogen in the reaction gas is set to 20 to 80 vol. % and is increased up to 100 vol. % as the reaction progresses.

12. Method according to any of claims 1 to 11, **characterised in that** in step b, the proportion of hydrogen amounts to 0 to 10 vol. %, relative to the sum of nitrogen and argon.

13. Method according to any of claims 1 to 12, **characterised in that** the retention time of the partially azotised silicon nitride in step b) is 1 to 14 days.

14. Method according to any of claims 1 to 13, **characterised in that** the silicon nitride produced in step b) has an α-phase of > 60 wt. %.

15. Method according to any of claims 1 to 14, **characterised in that** the granular silicon nitride produced in step b) has a particle size of 0.1 to 30 mm, preferably 0.5 to 25 mm.

## Revendications

1. Procédé de fabrication de nitrure de silicium hautement pur en deux étapes, **caractérisé en ce que**
a) du silicium hautement pur est mis en réaction avec de l'azote dans un four rotatif possédant une première zone de température de 1.150 à 1.250 °C et au moins une autre zone de température de 1.250 à 1.350 °C, en présence d'un mélange gazeux constitué d'argon et d'hydrogène, jusqu'à une teneur en azote de 10 à 30 % en poids et
b) l'on laisse le produit partiellement azoté de l'étape a) réagir dans un four de repos ou à chambre de 1.100 à 1.450 °C avec un mélange d'azote et éventuellement d'argon et/ou éventuellement d'hydrogène jusqu'à la fin de l'absorption de l'azote.

2. Procédé selon la revendication 1, **caractérisé en ce que** la poudre de silicium hautement pur possède une granulométrie inférieure à 100 µm, en particulier une granulométrie inférieure à 20 µm.

3. Procédé selon la revendication 1 ou 2, **caractérisé en ce que** le silicium hautement pur présente une pureté supérieure à 99,9 %, en particulier supérieure à 99,99 %.

4. Procédé selon l'une des revendications 1 à 3, **caractérisé en ce que** les impuretés métalliques présentes dans le silicium s'élèvent à moins de 100 ppm, de préférence à moins de 50 ppm.

5. Procédé selon l'une des revendications 1 à 4, **caractérisé en ce que** le four rotatif possède une première zone de température de 1.150 à 1.250 °C et deux autres zones de température de 1.250 à 1.350 °C.

6. Procédé selon l'une des revendications 1 à 5, **caractérisé en ce que** la teneur en argon dans l'étape a) s'élève à 5 à 30 % en volume, de préférence à 10 à 20 % en volume, par rapport à la teneur en azote.

7. Procédé selon l'une des revendications 1 à 6, **caractérisé en ce que** l'on met en oeuvre l'hydrogène dans l'étape a) dans une proportion comprise entre 1 et 10 % en volume, de préférence entre 3 et 7 % en volume, par rapport à la somme de l'azote et de l'argon.

8. Procédé selon l'une des revendications 1 à 7, **caractérisé en ce que** l'étape réactionnelle a) dans le four rotatif est effectuée dans l'intervalle de pression de 1,01 à 1,8 bar.

9. Procédé selon l'une des revendications 1 à 8, **caractérisé en ce que** le temps de séjour de la poudre de silicium dans l'étape réactionnelle a) est compris entre 60 et 180 minutes.

10. Procédé selon l'une des revendications 1 à 9, **caractérisé en ce que** l'on effectue l'azotage partiel selon l'étape a) jusqu'à une teneur en azote de 15 à 20 % en poids.

11. Procédé selon l'une des revendications 1 à 10, **caractérisé en ce que** dans l'étape b) on ajuste la proportion d'azote dans le gaz réactionnel à 20 à 80 % en volume et on l'augmente jusqu'à 100 % en volume en fonction de la progression de la réaction.

12. Procédé selon l'une des revendications 1 à 11, **caractérisé en ce que** la proportion d'hydrogène dans l'étape b) est comprise entre 0 et 10 % en volume par rapport à la somme de l'azote et de l'argon.

13. Procédé selon l'une des revendications 1 à 12, **caractérisé en ce que** le temps de séjour du nitrure de silicium partiellement azoté dans l'étape b) est compris entre 1 et 14 jours.

14. Procédé selon l'une des revendications 1 à 13, **caractérisé en ce que** le nitrure de silicium fabriqué dans l'étape b) présente une phase α supérieure à 60 % en poids.

15. Procédé selon l'une des revendications 1 à 14, **caractérisé en ce que** le granulé de nitrure de silicium fabriqué dans l'étape b) possède une granulométrie comprise entre 0,1 et 30 mm, de préférence entre 0,5 et 25 mm.
